# EUROPEAN PATENT APPLICATION

(11) **EP 2 559 654 A2**
(43) Date of publication of application: **20.02.2013**
(21) Application number: 11769028.9
(22) Date of filing: 11.04.2011
(51) Int. Cl.: B82B 3/00, C01G 5/00

(54) **METHOD FOR THE MASS PRODUCTION OF SILVER NANOPARTICLES HAVING A UNIFORM SIZE**

(30) Priority: 12.04.2010 KR 20100033195
(71) Applicant: SNU R & DB Foundation, Gwanak-gu, Seoul 151-741 (KR)
(72) Inventor: HYEON, Taeghwan, Seoul 135-537 (KR); PARK, Jinkyung, Seoul 151-744 (KR)
(74) Representative: Bassil, Nicholas Charles
(86) International application number: PCT/KR2011/002522
(87) International publication number: WO 2011/129562

(57) **Abstract**

The present invention relates to a process for preparing uniform silver nanoparticles. In particular, the present invention is directed to a process for preparing silver nanoparticles comprising: (i) heating a mixture of a silver precursor and a surfactant under inert atmosphere to prepare silver nanoparticles; and (ii) separating the silver nanoparticles from the reaction products of the step (i).

## Description

### [Technical Field]

The present invention relates to a process for preparing uniform silver nanoparticles. In particular, the present invention is directed to a process for preparing silver nanoparticles comprising: (i) heating a mixture of a silver precursor and a surfactant under inert atmosphere to prepare silver nanoparticles; and (ii) separating the silver nanoparticles from the reaction products of the step (i).

### [Background Art]

In the field of rapidly developing nanotechnologies, silver nanoparticles are usefully utilized in various areas. Silver nanoparticles are, for example, applicable to biosensors, due to their high surface plasmon absorption. Since silver nanoparticles are photo-fluorescence markers, they may be used for medical applications and the like.

In addition, silver nanoparticles are environmentally friendly and biologically compatible. Silver nanoparticles may be used for smart windows, rewritable electronic papers, electronic panel displays, memory components and the like. Moreover, silver nanoparticles are much important as conductive devices for electronics since silver is cheaper than gold and more stable than copper.

Silver nanoparticles are applicable to catalysts for selective oxidation of styrene, real-time optical sensors, conductive inks, etc. Furthermore, when the size of a silver nanoparticle is less than or equal to 2 nm, the silver nanoparticle becomes fluorescent by formation of band gap due to quantum confinement effects. These properties of the silver nanoparticle are useful to bioimaging.

According to the conventional technologies, silver nanoparticles have been produced by various processes such as co-precipitation methods in an aqueous solution, electrochemical methods, aerosol methods, reverse microemulsion methods, chemical liquid deposition methods, photochemical reduction methods, chemical reduction methods in a solution and UV irradiation methods. However, the conventional technologies have difficulties in control of particle sizes and large-scale production of particles.

There are a variety of methods for producing nanometer-sized metallic nanoparticles. For example, US Patent No. 6,572,673 discloses a process for preparing metal nanoparticles, comprising reacting suitable metal salts and anionic surfactant containing an anionic group of carboxylic group, sulfate group or sulfonate group as reducing agent in water under reflux at a temperature of 50-140°C. In contrast to the present invention, US Patent No. 6,572,673 employs water to prepare silver nanoparticles.

In addition, US 2006/0045916 discloses a method for making silver nanoparticles, comprising reacting a silver salt with a phosphene amino acid. However, US 2006/0045916 has a disadvantage in respect of using an expensive material, i.e., phosphene amino acid in contrast to the present invention.

Further, US 2009/0013825 discloses a process for synthesis of silver nano particle, consisting of reacting silver salt and an anionic surfactant, or a nonionic surfactant, and a reducing agent in water at room temperature; thereby, reducing said silver salt into silver particles. However, the process of US 2009/0013825 is based on an aqueous solution and employs a reducing agent comparing with the present invention.

Moreover, WO 2009/133446 discloses a process for the preparation of silver nanoparticles comprising dissolving a surfactant in ethanol to obtain a first solution; dissolving a silver precursor in water to obtain a second solution; adding the second solution to the first solution to obtain a third solution; dissolving a reducing agent in water to obtain a reducing agent solution and adding the reducing agent solution to the third solution to obtain silver nanoparticles. In comparison with the present invention, WO 2009/133446 employs ethanol, water and a reducing agent for preparation of silver nanoparticles.

Therefore, there is a need in the art for a simple, fast and easy process for preparing uniform silver nanoparticles with inexpensive materials.

### [Disclosure]

### [Technical Problem]

The object of the present invention is to provide a process for preparing silver nanoparticles comprising: (i) heating a mixture of a silver precursor and a surfactant under inert atmosphere to prepare silver nanoparticles; and (ii) separating said silver nanoparticles from the reaction products of the step (i).

### [Technical Solution]

The aforementioned object of the present invention can be achieved by providing a process for preparing silver nanoparticles comprising: (i) heating a mixture of a silver precursor and a surfactant under inert atmosphere to prepare silver nanoparticles; and (ii) separating said silver nanoparticles from the reaction products of the step (i).

The silver precursor of the process of the present invention may be selected from AgBF₄, AgCF₃SO₃, AgClO₄, AgNO₃, Ag(CH₃COO), AgPF₆, Ag(CF₃COO) or mixtures thereof.

In addition, the surfactant may be preferably C8-C22 carboxylic acid and the C8-C22 carboxylic may be selected from octanoic acid, decanoic acid, lauric acid, hexadecanoic acid, oleic acid, erucic acid, stearic acid, benzoic acid, biphenylcarboxylic acid or mixtures thereof.

The surfactant may further comprise C₈-C₂₄ amine and the C₈-C₂₄ amine may be selected from octylamine, trioctylamine, decylamine, dodecylamine, tetradecy amine, oleylamine, octadecylamine, tribenzylamine, triphenylamine or mixtures thereof.

Preferably, the mixture of the step (i) of the process of the present invention may be heated to 50°C at a heating rate of 0.5 °C/min to 50 °C /min and, then, may be kept at that temperature for 30 seconds to 3 days. In addition, the reaction pressure of the step (i) may be preferably 0.5 atm to 10 atm.

The mole ratio of the silver precursor and the surfactant may be preferably 1:0.5 to 1:100.

The sizes of the silver nanoparticles prepared by the present invention may be controlled by varying a mole ratio of the silver precursor and the surfactant, a surfactant, a heating rate, a heating temperature and time, etc.

### [Description of Drawings]

Fig. 1 shows high-magnification (Fig. 1A) and low-magnification (Fig. 1B) TEM (transmission electron microscope) images of the silver nanoparticles prepared in Example 1 of the present invention. According to Fig. 1A, the silver nanoparticles form highly-ordered super-lattice arrays. The FTT (fast Fourier transform) image (the inset of Fig. 1B) shows that the array of the silver nanoparticles are highly ordered, indicating that the size of the silver nanoparticles are very uniform.
Fig. 2 is the XRD (X-ray diffraction) measurement result of the silver nanoparticles prepared in Example 1 of the present invention.
Fig. 3 is the UV/Vis absorption spectrum of the silver nanoparticles prepared in Example 1 of the present invention.
Fig. 4 is the photoluminescence spectra of the silver nanoparticles prepared in Example 1 of the present invention.
Fig. 5 is the photoluminescence excitation spectra of the silver nanoparticles prepared in Example 1 of the present invention.
Fig. 6 is TEM images of the silver nanoparticles prepared in Example 2 of the present invention.
Fig. 7 is TEM images of the silver nanoparticles prepared in Example 3 of the present invention.
Fig. 8 is TEM images of the silver nanoparticles prepared in Example 4 of the present invention.

### [Advantageous Effects]

According to the process of the present invention, uniform silver nanoparticles with nanometer-size, specifically less than or equal to 4 nm may be simply prepared in a large scale. The silver nanoparticles prepared by the process of the present invention are applicable to conductive inks or efficient catalysts. Moreover, silver nanoparticles with sizes of less than or equal to 2 nm are fluorescent by formation of a band gap due to quantum confinement effects. These property of the silver nanoparticle are useful for bioimaging.

### [Best Mode]

Hereinafter, the present invention will be described in greater detail with reference to the following examples. The examples are given only for illustration of the present invention and not to be limiting the present invention.

### Example 1. Preparation of 1.2 nm-sized silver nanoparticles

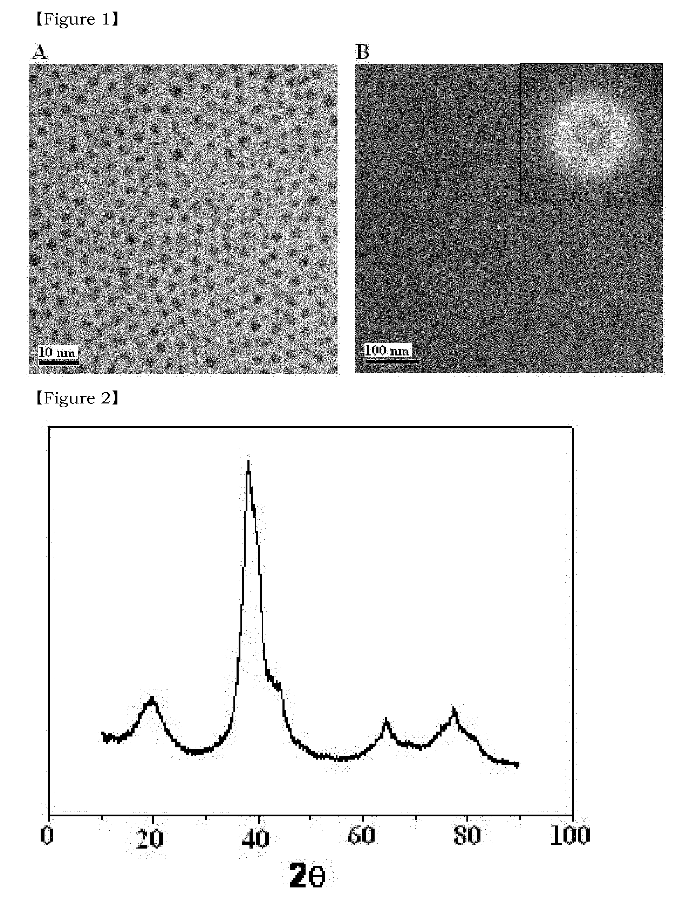

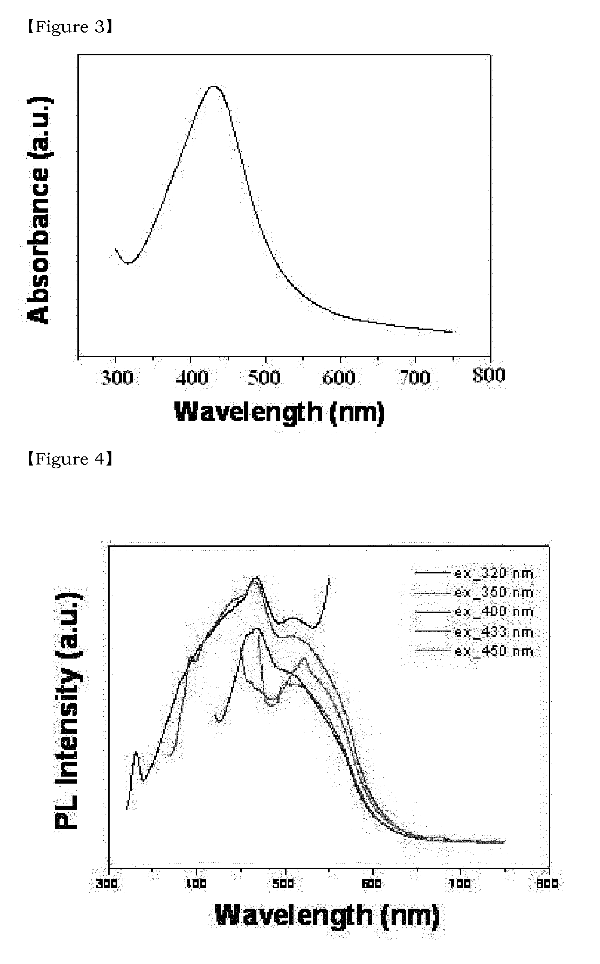

Silver nitrate (0.17 g, 1 mmol) was added to a mixture of oleylamine (0.5 ml) and oleic acid (4.5 ml). The reaction mixture was agitated at 70°C for 1.5 hours with removing remaining air therefrom by using a vacuum pump. Then, the mixture solution was heated to a temperature of 180°C at a heating rate of 10 °C/min and maintained at the same temperature for 1 min. The heated mixture solution was cooled to a temperature of 100°C and, then, washed with a mixture of toluene and methanol. The washed solution was centrifuged to obtain 2 nm-sized silver nanoparticles (Fig. 1). The XRD measurement results, UV/Vis absorption spectrum, PL (photoluminescence) spectra and PLE (photoluminescence excitation) spectra for the thus prepared silver nanoparticles are shown in Fig. 2 to Fig. 5, respectively.

### Example 2. Preparation of 3 nm-sized silver nanoparticles

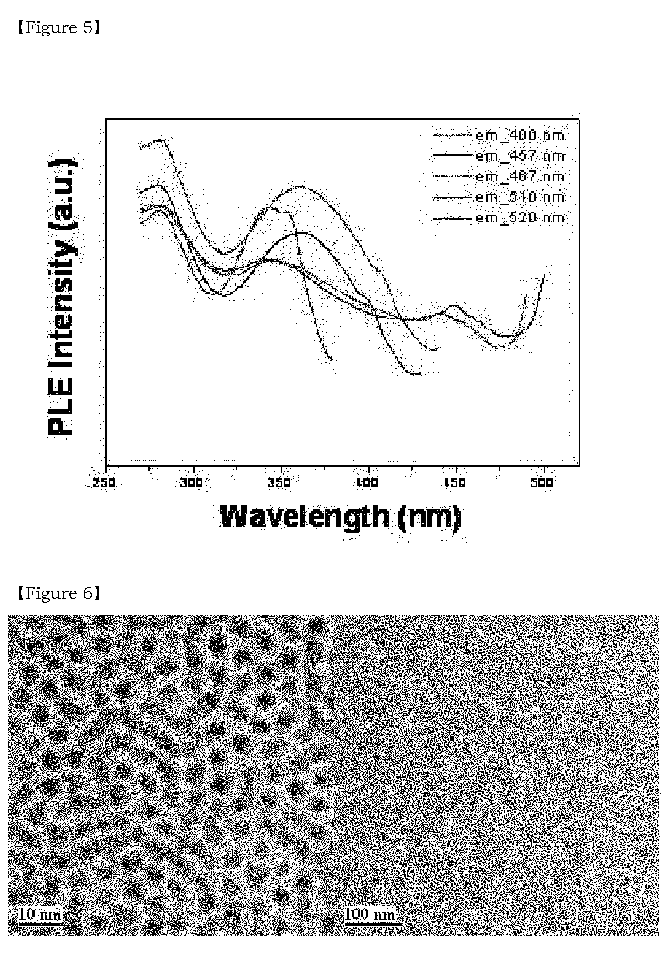

3 nm-sized silver clusters were prepared by the same process as Example 1, except that a heating rate was 1 °C/min (Fig. 6).

### Example 3. Preparation of 4 nm-sized silver nanoparticles

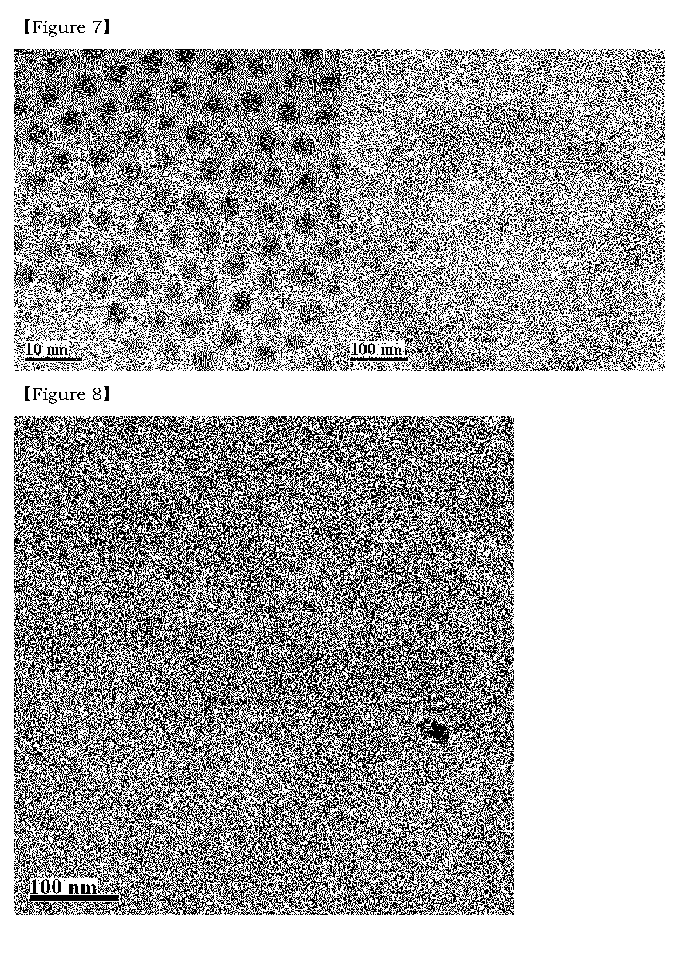

4 nm-sized silver nanoparticles were prepared by the same process as Example 1, except that erucic acid was used instead of oleic acid (Fig. 7).

### Example 4. Large scale preparation of 2 nm-sized silver nanoparticles

Silver nitrate (1.7 g, 10 mmol) was added to a mixture of oleylamine (5 ml) and oleic acid (5 ml). The thus obtained mixture was agitated at 70°C for 1.5 hours with removing remaining air therefrom by using a vacuum pump. Then, the mixture solution was heated to a temperature of 180°C at a heating rate of 10 °C/min and the temperature was maintained for 1 min. The heated mixture solution was cooled to a temperature of 100°C and, then, washed with a mixture of toluene and methanol. The washed solution was centrifuged to obtain 2 nm-sized silver nanoparticles (Fig. 8).

## Claims

1. A process for preparing silver nanoparticles comprising:
(i) heating a mixture of a silver precursor and a surfactant under inert atmosphere to prepare silver nanoparticles; and
(ii) separating said silver nanoparticles from the reaction products of the step (i).

2. The process of Claim 1, wherein said silver precursor is selected from the group consisting of AgBF₄, AgCF₃SO₃, AgClO₄, AgNO₃, Ag(CH₃COO), AgPF₆, Ag(CF₃COO) and mixtures thereof.

3. The process of Claim 1, wherein said surfactant is C₈-C₂₂ carboxylic acid.

4. The process of Claim 3, wherein said C₈-C₂₂ carboxylic acid is selected from the group consisting of octanoic acid, decanoic acid, lauric acid, hexadecanoic acid, oleic acid, erucic acid, stearic acid, benzoic acid, biphenylcarboxylic acid and mixtures thereof.

5. The process of Claim 3 or 4, wherein said surfactant further comprises C₈-C₂₄ amine.

6. The process of Claim 5, wherein said C₈-C₂₄ amine is selected from the group consisting of octylamine, trioctylamine, decylamine, dodecylamine, tetradecy amine, oleylamine, octadecylamine, tribenzylamine, triphenylamine and mixtures thereof.

7. The process of Claim 1, wherein the heating temperature of the step (i) is 50°C to a boiling point of said surfactant.

8. The process of Claim 1, wherein the pressure of the reaction of the step (i) is 0.5 atm to 10 atm.

9. The process of Claim 1, wherein the heating rate of the step (i) is 0. 5 °C/min to 50 °C/min.

10. The process of Claim 1, wherein the heating time of the step (i) is 30 seconds to 3 days.

11. The process of Claim 1, wherein a mole ratio of said silver precursor and said surfactant is 1:0.5 to 1:100.
